# FASCICULE DE BREVET EUROPEEN

(11) **EP 4 151 086 B1**
(45) Date de publication et mention de la délivrance du brevet: **24.04.2024**
(21) Numéro de dépôt: 22195163.5
(22) Date de dépôt: 12.09.2022
(51) Int. Cl.: A01K 5/015, A01K 5/01

(54) **STRUCTURE SUPPORT POUR LA MISE À DISPOSITION D'UN PRODUIT À DES ANIMAUX D'ÉLEVAGE NOTAMMENT D'UN COMPLÉMENT NUTRITIONNEL SOLIDE À LÉCHER**
TRÄGERSTRUKTUR FÜR DIE BEREITSTELLUNG EINES PRODUKTS FÜR NUTZTIERE, INSBESONDERE EINES FESTEN NAHRUNGSERGÄNZUNGSMITTELS ZUM LECKEN
SUPPORT STRUCTURE FOR PROVIDING A PRODUCT FOR FARM ANIMALS, IN PARTICULAR A LICKABLE SOLID NUTRITIONAL SUPPLEMENT

(30) Priorité: 13.09.2021 FR 2109578
(43) Date de publication de la demande: 22.03.2023
(73) Titulaire: Polymoule, 72550 Coulans sur Gee (FR)
(72) Inventeur: COSNET, Gilbert, 72550 DEGRÉ (FR)
(74) Mandataire: Jacobacci Coralis Harle

(56) Documents cités:
- DE-B3-102005 028 074
- DE-U1- 8 101 623
- DE-U1- 29 608 755
- JP-A- 2020 080 762

## Description

### Domaine technique de l'invention

La présente invention concerne le domaine général de l'agriculture et en particulier le domaine technique des accessoires pour l'élevage d'animaux.

Elle concerne plus particulièrement une structure support pour la mise à disposition d'un produit à des animaux d'élevage, notamment d'un complément nutritionnel solide à lécher.

### Etat de la technique

En plus de leur alimentation habituelle, il est classique de fournir aux animaux d'élevage (bovins, ovins, caprins, porcins, équins ou autres), des compléments nutritionnels ou alimentaires permettant d'optimiser leur croissance, de renforcer leurs défenses immunitaires et/ou plus généralement d'améliorer leur état de forme et leur bien-être.

De tels compléments nutritionnels peuvent être incorporés au sein de blocs de matière solide moulés proposés aux animaux en libre-service, ces derniers ayant la possibilité de les lécher pour assurer l'ingestion du complément d'intérêt.

Ces blocs de matière solide peuvent être utilisés bruts après démoulage et on les dénomme alors couramment « blocs à lécher » ; ils peuvent aussi être moulés dans des contenants tels que des seaux ou des bassines, appelés couramment « seaux à lécher » ou « bacs à lécher ».

Les seaux à lécher, bacs à lécher ou blocs à lécher sont habituellement déposés sur le sol des espaces de stabulation libre ou des pâturages, les animaux ayant la possibilité de s'en approcher et de les lécher à volonté.

Cependant, ces blocs solides de compléments nutritionnels à lécher, déposés à même le sol, sont souvent souillés par des éléments extérieurs.

De la même manière, les seaux ou bacs à lécher sont généralement proposés mobiles/déplaçables et les animaux peuvent les renverser, rendant ainsi leur contenu indisponible.

Il existe donc un besoin de proposer d'autres solutions pour mettre à disposition des animaux d'élevage des produits alimentaires divers et en particulier des compléments nutritionnels à lécher.

Le document DE 10 2005 028074 B3 décrit une structure support pour la mise à disposition à des animaux d'élevage d'un complément nutritionnel solide à lécher, cette structure comprenant un logement adapté pour la réception dudit produit, lequel logement est constitué d'une ouverture de logement délimitée par un contour d'ouverture à partir duquel s'étend vers le bas une paroi de logement qui se termine par un fond de logement. Cette structure comprend également une paroi arrière, des parois de côté et une paroi avant, ces parois s'étendant toutes dans des plans perpendiculaires au fond du logement, et la paroi arrière 9 comprenant des orifices de fixation adaptés à la fixation de ladite structure support sur un organe support.

### Présentation de l'invention

Afin de remédier à l'inconvénient précité de l'état de la technique, la présente invention propose, conformément à la revendication 1, une structure support pour la mise à disposition à des animaux d'élevage d'un produit, notamment d'un complément nutritionnel solide à lécher,
la structure support comprenant un plateau embase délimité par un pourtour de plateau comprenant une bordure arrière, deux bordures de côtés et une bordure avant, lequel plateau embase s'étend dans un plan de plateau et comprend un logement adapté pour la réception dudit produit, notamment en forme de complément nutritionnel solide à lécher ou d'un contenant dudit complément nutritionnel solide à lécher,
lequel logement est constitué d'une ouverture de logement ménagée dans ledit plateau embase, laquelle ouverture de logement est délimitée par un contour d'ouverture à partir duquel s'étend vers le bas une paroi de logement qui se termine par un fond de logement,
laquelle bordure arrière dudit plateau embase se prolonge, de part et d'autre dudit plan de plateau, par une paroi arrière,
lesquelles bordures de côté dudit plateau embase se prolongent chacune, de part et d'autre dudit plan de plateau, par une paroi de côté,
et laquelle bordure avant dudit plateau embase se prolonge, sous ledit plan de plateau, par une paroi avant,°
lesquelles paroi arrière, parois de côté et paroi avant s'étendent dans des plans perpendiculaires ou pratiquement perpendiculaires audit plan de plateau,
ladite paroi arrière et lesdites parois de côté comprenant des orifices de fixation adaptés à la fixation de ladite structure support au moyens de vis et/ou d'étriers sur un organe support tel qu'un mur ou au moins une lisse horizontale de barrière.

Une telle structure support, fixée sur un mur ou au moins une lisse de barrière, permet de présenter aux animaux le complément nutritionnel solide à lécher, à un endroit défini, de manière ergonomique et sans possibilité de renversement.

Cette structure, positionnée à une hauteur adaptée aux animaux, permet d'améliorer leur appétence et de limiter les risques de souillures.

D'autres caractéristiques non limitatives et avantageuses de la structure support conforme à l'invention, prises individuellement ou selon toutes les combinaisons techniquement possibles, sont les suivantes :
- certains au moins desdits orifices de fixation sont organisés en couples d'orifices alignés verticalement, pour la fixation au moyen d'étrier(s) ;
- la paroi arrière comprend au moins deux couples d'orifices de fixation, et les parois de côté comprennent chacune au moins deux couples d'orifices de fixation ; plus particulièrement, la paroi arrière comprend au moins deux couples d'orifices de fixation alignés horizontalement, ménagés d'un côté du plan de plateau, et au moins deux couples d'orifices de fixation alignés horizontalement, ménagés de l'autre côté du plan de plateau, et les parois de côté comprennent chacune au moins un couple d'orifices de fixation, ménagés au-dessus dudit plan de plateau, et au moins deux couples d'orifices de fixation alignés horizontalement, ménagés au-dessous dudit plan de plateau ;
- les côtés latéraux de la paroi arrière se prolongent chacun de manière monobloc par l'un des côtés latéraux de l'une de parois de côté ; alors, au-dessus dudit plan de plateau, les parois de côté s'étendent sur une partie seulement de la longueur des bordures de côté du plateau embase, et la bordure d'extrémité libre des parois de côté s'étend en pente ou en biais depuis une bordure supérieure de chaque paroi de côté jusqu'au plateau embase, pour former un pan coupé ;
- l'extrémité supérieure dudit pan coupé comprend une extension en saillie, et la base dudit pan coupé comprend une réservation en creux, complémentaire de ladite extension en saillie, laquelle extension en saillie et laquelle réservation en creux sont adaptées pour constituer des structures d'emboitement pour stabiliser deux structures support identiques agencées tête-bêche, lors du stockage ou du transport ;
- la paroi arrière et les parois de côté comprennent chacune un panneau extérieur qui s'étend sur toute leur hauteur et un panneau intérieur qui s'étend vers le haut à partir dudit plateau embase, lesquels panneaux extérieurs et panneaux intérieurs s'étendent parallèlement entre eux sur chaque paroi et sont raccordés au niveau de leur bordure supérieure, et lesdits panneaux extérieurs de la paroi arrière et des parois de côté se prolongent par ladite paroi avant pour former une jupe périphérique.
- les orifices de fixation de la paroi arrière sont adaptés pour permettre l'assemblage de deux structures supports identiques disposées dos à dos, et les orifices de fixation des parois de côté sont adaptés pour permettre l'assemblage d'au moins deux structures supports identiques placées côte à côte.
- la structure support comprend (a) une jupe périphérique qui se termine par une bordure libre inférieure comprenant un bourrelet de rigidification en saillie vers l'extérieur, et (b) une surépaisseur plane au niveau de certains au moins desdits orifices de fixation, qui permet de compenser l'épaisseur saillante dudit bourrelet de rigidification et ainsi d'optimiser le contact plan lors de l'assemblage des structures support entre elles.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
La figure 1 est une vue en perspective par-dessus d'un mode de réalisation possible d'une structure support selon l'invention ;
La figure 2 est une vue en perspective par-dessous de la structure support illustrée sur la figure 1 ;
La figure 3 est une vue de dessus de la structure support illustrée sur les figures 1 et 2 ;
La figure 4 est une vue de face de la structure support illustrée sur les figures 1 à 3;
La figure 5 est une vue en coupe selon le plan de coupe 5-5 de la figure 4 ;
La figure 6 est une vue de côté de la structure support illustrée sur les figures 1 à 5;
La figure 7 est une vue en coupe selon le plan de coupe 7-7 de la figure 6 ;
La figure 8 est une vue en coupe selon le plan de coupe 8-8 de la figure 6 ;
La figure 9 est une vue de derrière de la structure support illustrée sur les figures 1 à8 ;
La figure 10 est une vue en perspective illustrant une structure support telle qu'illustrée sur les figures 1 à 9, fixée sur des lisses horizontales d'une barrière ;
La figure 11 est une vue en perspective illustrant deux structures support telles qu'illustrées sur les figures 1 à 9, assemblées côte à côte et fixées sur des lisses de barrière ;
La figure 12 est une vue en perspective illustrant deux structures support telles qu'illustrées sur les figures 1 à 9, assemblées dos à dos et fixées sur des lisses de barrière ;
La figure 13 est une vue en perspective illustrant deux structures support telles qu'illustrées sur les figures 1 à 9, assemblées dos à dos et fixées sur un mur.

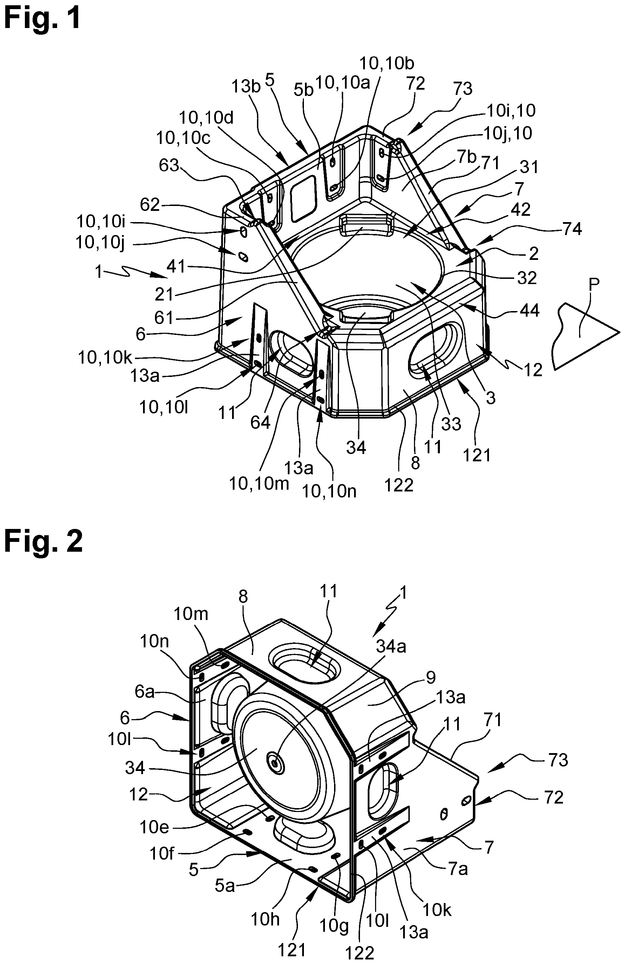

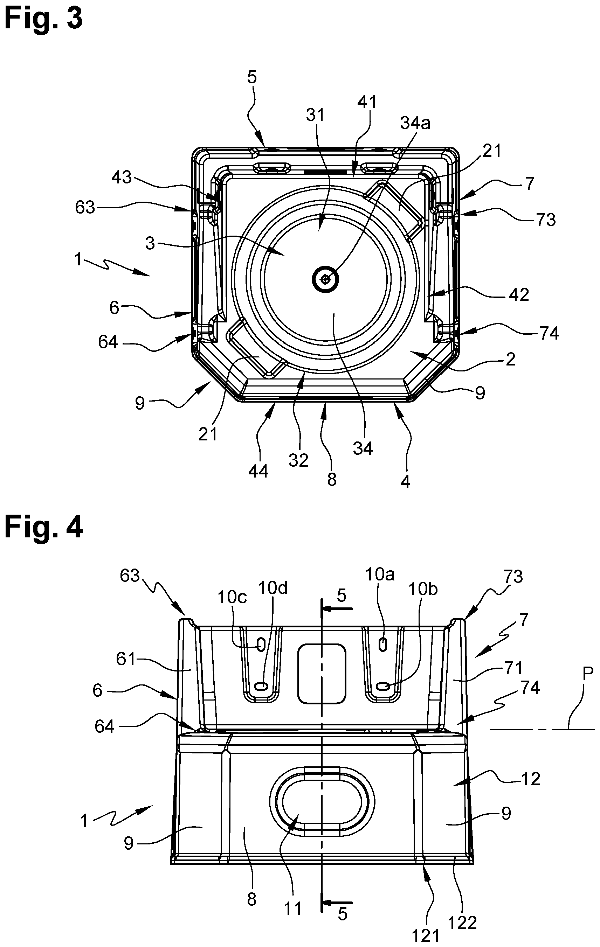

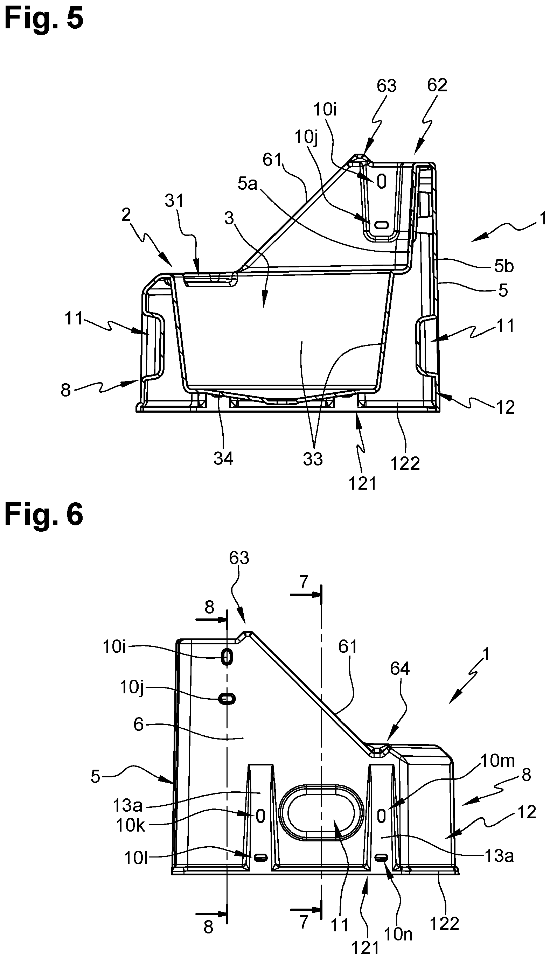

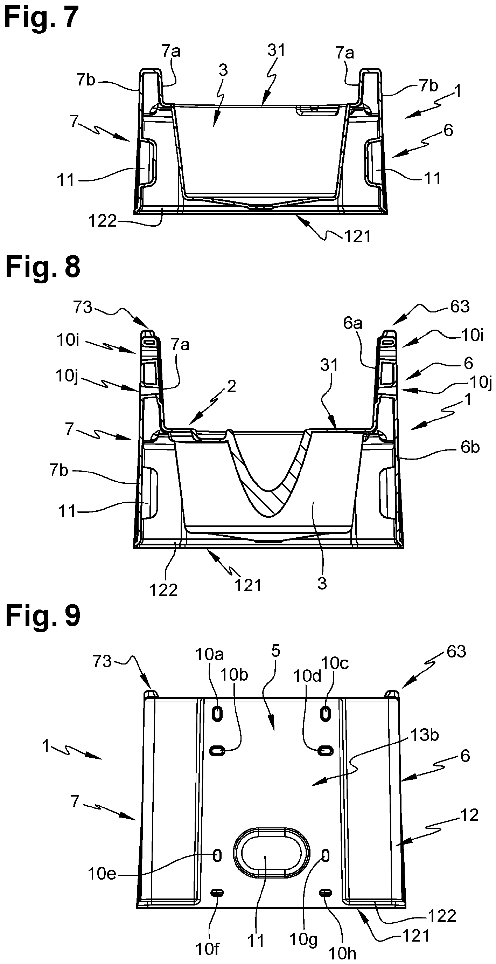

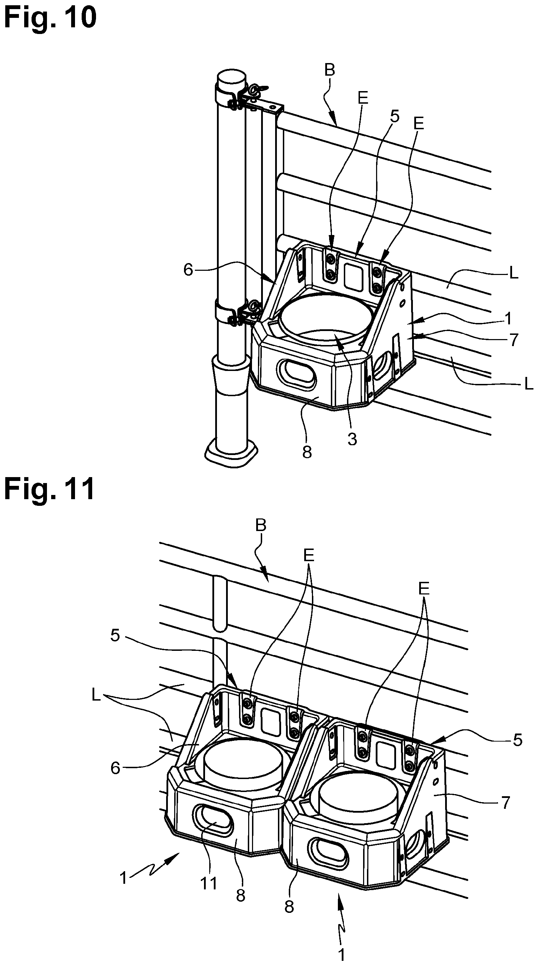

La structure support 1 illustrée sur les figures 1 à 9 est adaptée pour être fixée sur un mur ou sur des lisses de barrière (comme illustré sur les figures 10 à 13), en vue de mettre à disposition en libre-service, à des animaux d'élevage, une matière ou produit à ingérer, en particulier un complément nutritionnel solide à lécher.

Comme on peut le voir sur ces figures 1 à 9 la structure support 1 comprend un plateau embase 2 qui s'étend dans un plan P horizontal (ou quasi horizontal) en position normale d'utilisation, lequel plateau embase 2 comprend un logement 3 qui s'étend vers le bas, adapté pour la réception dudit complément nutritionnel solide à lécher ou d'un contenant dudit complément nutritionnel solide à lécher.

Le logement 3 est constitué d'une ouverture de logement 31, ici circulaire, ménagée dans le plateau embase 2, laquelle ouverture de logement 31 est délimitée par un contour d'ouverture 32 à partir duquel s'étend vers le bas une paroi de logement 33 qui se termine par un fond de logement 34.

La paroi de logement 33 est de forme générale tronconique, évasée depuis le fond de logement 34 en direction du contour d'ouverture 32. La pente de cet évasement, par rapport à la verticale, peut être comprise entre 5 et 15°, par exemple de l'ordre de 7°.

Chaque logement 3 est adapté à recevoir, avec un léger jeu fonctionnel, un seau à lécher de forme générale tronconique.

Le plateau embase 2 présente ici une forme générale carrée et il est délimité par un pourtour de plateau 4 comprenant une bordure arrière 41, deux bordures de côtés 42, 43 et une bordure avant 44.

Le plateau embase 2 comprend ici des réservations 21 agencées pour recevoir des poignées monobloc pouvant équiper les contenants en forme de seaux (type seaux à lécher) destinés à être introduits dans les logements 3. Ces réservations 21 sont au nombre de deux, diamétralement opposée sur la périphérie du contour d'ouverture 32. Elles permettent en particulier de caler en rotation les seaux à lécher en place dans leur logement 3 de réception.

Dans la structure support 1 :
- la bordure arrière 41 du plateau embase 2 se prolonge, de part et d'autre du plan de plateau P, par une paroi arrière 5,
- les bordures de côté 42, 43 du plateau embase 2 se prolongent chacune, de part et d'autre dudit plan de plateau P, par une paroi de côté 6, 7, et
- la bordure avant 44 du plateau embase 2 se prolonge, sous ledit plan de plateau P, par une paroi avant 8.

La paroi arrière 5, les parois de côté 6 et 7, et la paroi avant 8 s'étendent dans des plans perpendiculaires ou pratiquement perpendiculaires au plan de plateau P.

Sous le plan de plateau P, la paroi arrière 5, les parois de coté 6, 7 et la paroi avant 8 s'étendent dans la continuité l'une de l'autre et sur une même hauteur pour constituer une jupe périphérique 12. La hauteur de cette jupe périphérique 12 est supérieure à la profondeur du logement 3. Elle se termine par une bordure libre inférieure 121 comprenant un bourrelet 122 en forme de surépaisseur permettant d'améliorer la rigidité de la structure support 1.

Sur les figures, on remarque que les parois de côté 6 et 7 sont raccordées à la paroi avant 8 par des structures en pans coupés 9 adaptées pour faciliter l'accès au logement 3 par les animaux.

Au-dessus du plan de plateau P, les côtés latéraux de la paroi arrière 5 se prolongent chacun de manière monobloc par l'un des côtés latéraux de l'une des parois de côté 6, 7 ; et ces parois de côté 6, 7 s'étendent sur une partie seulement de la longueur des bordures de côté 42, 43 du plateau embase 2.

Sur les figures 1, 2, 4, 5 et 6 notamment, on remarque que la bordure d'extrémité libre 61, 71 des parois de côté 6, 7 s'étend en pente (ou en biais) depuis une bordure supérieure 62, 72 de chaque paroi de côté 6, 7 jusqu'au plateau embase 2, pour former un pan coupé.

Ce pan coupé 61, 71 est centré sur l'axe médian de la structure support 1 qui traverse les parois de côté 6, 7 et qui est parallèle à la paroi arrière 5 et à la paroi avant 8.

L'extrémité supérieure des pans coupés 61, 71 comprend une extension en saillie 63, 73 ; et la base de ces pans coupés 61, 71 comprend une réservation en creux 64, 74, complémentaire de ladite extension en saillie 63, 73.

Ces extensions en saillie 63, 73 et réservations en creux 64, 74 sont adaptées pour constituer des structures d'emboitement pour stabiliser deux structures support 1 identiques, agencées tête-bêche, lors du stockage ou du transport (les extensions 63, 73 d'une première structure support venant coopérer par emboitement avec les réservations 64, 74 d'une seconde structure support).

D'autre part, la paroi arrière 5 et les parois de côté 6, 7 comprennent des orifices de fixation 10 adaptés à la fixation de la structure support 1 sur un organe support tel qu'un mur M ou des lisses horizontales de barrière L, cela au moyen de vis V et/ou d'étriers E. La fixation de la structure support 1 sur les lisses L d'une barrière B, ou sur un mur M est de préférence réalisée au-dessus du sol.

Dans ce cadre, au moins certains de ces orifices de fixation 10 sont organisés en couples d'orifices alignés verticalement, permettant une fixation au moyen d'étrier(s).

Et dans le mode de réalisation illustré sur les figures, tous les orifices de fixation 10 sont organisés en couples d'orifices alignés verticalement, permettant une fixation au moyen d'étrier(s) E.

Pour obtenir une fixation efficace, la paroi arrière 5 et les parois de côté 6, 7 comprennent chacune au moins deux couples d'orifices de fixation 10.

Et toujours par mesure d'efficacité ces parois arrière 5 et de côté 6, 7 comprennent des couples d'orifices de fixation organisés sur deux lignes parallèles : une première ligne située au-dessus du plan de plateau P, et une seconde ligne située au-dessous du plan de plateau P.

En l'occurrence dans le mode de réalisation représenté sur les figures :
- la paroi arrière 5 comprend deux couples d'orifices de fixation 10a-10b et 10c-10d alignés horizontalement, ménagés au-dessus du plan de plateau P, ainsi que deux couples d'orifices de fixation 10e-10f et 10g-10h alignés horizontalement, ménagés au-dessous du plan de plateau P, et
- les parois de côté 6, 7 comprennent chacune un couple d'orifices de fixation 10i-10j, ménagés au-dessus dudit plan de plateau P, et deux couples d'orifices de fixation 10k-10l et 10m-10n alignés horizontalement, ménagés au-dessous dudit plan de plateau P.

La structure support 1 consiste en une pièce monobloc de matière plastique qui peut être obtenue par une technique de roto moulage. La matière plastique utilisée peut être du polyéthylène (PE).

La paroi arrière 5 et les parois de côté 6, 7 comprennent ici chacune un panneau intérieur 5a, 6a, 7a et un panneau extérieur 5b, 6b, 7b qui s'étendent parallèlement entre eux.

Les panneaux extérieurs 5b, 6b, 7b s'étendent sur toute la hauteur des parois 5, 6 et 7, alors que les panneaux intérieurs 5a, 6a, 7a s'étendent uniquement vers le haut depuis la bordure arrière 41 et les deux bordures de côtés 42, 43 du plateau embase 2.

Sur chaque paroi 5, 6, 7, les panneaux intérieurs 5a, 6a, 7a et les panneaux extérieurs 5b, 6b, 7b sont séparés de quelques centimètres, et ils sont raccordés au niveau de leurs bordures supérieures.

Les panneaux extérieurs 5b, 6b, 7b de la paroi arrière 5 et des parois de côté 6, 7 se prolongent par la paroi avant 8 pour former ensemble la jupe périphérique 12 de la structure support.

A noter que certaines parois ou parties de la structure support peuvent comporter des dépouilles (légères pentes) adaptées pour permettre le démoulage en relation avec la technique de fabrication par roto moulage.

La partie centrale du fond de logement 34 peut comporter un orifice 34a adapté à l'évacuation des liquides.

Les parois 5, 6, 7 et 8 comportent ici des structures en creux 11 qui s'ouvrent vers l'extérieur et en saillie vers l'intérieur, constituant des organes raidisseurs destinés à améliorer la rigidité de la structure support.

Les orifices de fixation 10a, 10b, 10c, 10d, 10e, 10f, 10g et 10h de la paroi arrière 5 peuvent être utilisés pour assembler entre elles deux structures supports 1 identiques disposées dos à dos (au moyen de boulons ou d'étriers).

De la même manière, les orifices de fixation 10i, 10j, 10k, 10l, 10m et 10n des parois de côté 6 et 7 peuvent être utilisés pour assembler entre elles deux structures supports 1 identiques placées côte à côte (par boulonnage ou au moyen d'étriers).

Les orifices de fixation 10 peuvent être réalisés lors du process de fabrication de la structure support 1 et/ou postérieurement à la fabrication, au moyen de perçages.

La structure support 1 peut ainsi être fixée, par sa paroi arrière 5, sur deux lisses L d'une barrière B, comme illustré sur la figure 10. Cette fixation est réalisée au moyen d'étriers E, plus particulièrement au moyen de quatre étriers E en relation avec les quatre couples d'orifices 10a-10b, 10c-10d, 10e-10f et 10g-10h.
Chaque étrier E, classique, est en forme générale de U dont les extrémités libres des branches parallèles comportent un filetage adapté à coopérer avec un écrou de fixation.

Comme illustré sur la figure 11, plusieurs structures support 1 peuvent être disposées côte à côte de la même manière et assemblées sur les deux lisses L de la barrière B au moyen d'étriers E. Alors les différentes structures support 1 peuvent être assemblées entre elles, au moyen de boulons ou d'étriers E traversant les orifices de fixation 10i, 10j, 10k, 10l, 10m et 10n des parois de côté 6 et 7.

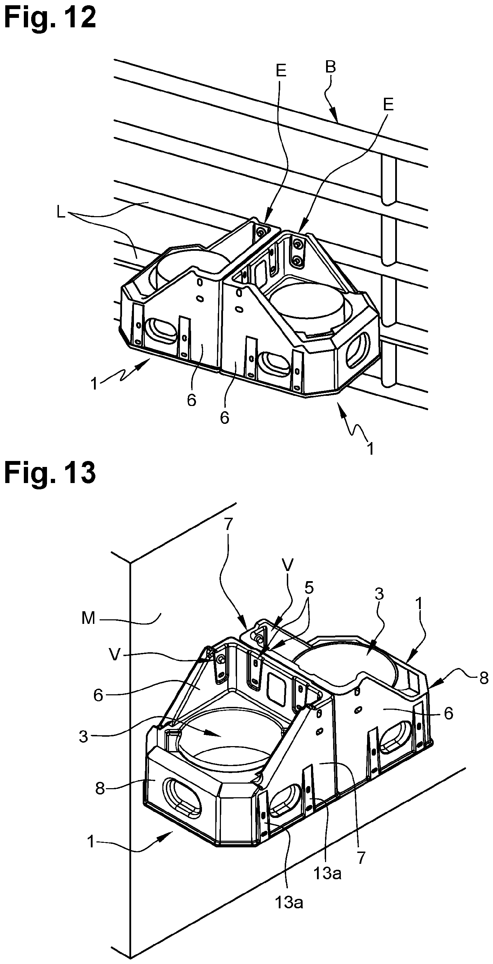

Selon une autre configuration illustrée sur la figure 12, deux structures support 1 peuvent être disposées dos à dos (leurs parois arrières 5 étant plaquées l'une contre l'autre) et fixées sur les deux lisses L d'une barrière B au moyen d'étriers E traversant les orifices de fixation 10i, 10j, 10k, 10l, 10m et 10n de leurs parois de côté 6 et 7. Plus particulièrement, cette fixation est réalisée au moyen de trois étriers E en relation avec les trois couples d'orifices 10i-10j, 10k-10l, et 10m-10n. Alors les deux structures support 1 peuvent être assemblées entre elles, au moyen de boulons ou d'étriers E traversant les orifices de fixation 10a, 10b, 10c, 10d, 10e, 10f, 10g et 10h des parois arrière 5 (ou au moins certains d'entre eux).

D'une manière similaire, la structure support 1 peut être fixée sur un mur, au-dessus du sol, soit par l'intermédiaire de sa paroi arrière 5, soit par l'intermédiaire de l'une de ses parois de côté 6, 7.

On a illustré sur la figure 13, deux structures support 1 disposées dos à dos (leurs parois arrières 5 étant plaquées l'une contre l'autre) et fixées sur un mur M au moyen de vis V traversant au moins certains des orifices de fixation 10i, 10j, 10k, 10l, 10m et 10n de leurs parois de côté 6 et 7. Alors les deux structures support 1 peuvent être assemblées entre elles, au moyen de boulons ou d'étriers E traversant les orifices de fixation 10a, 10b, 10c, 10d, 10e, 10f, 10g et 10h des parois arrières 5 (ou au moins certains d'entre eux).

En variante, au moins une structure support 1 peut être fixée, par sa paroi arrière 5 sur le mur M, au moyen de vis V traversant au moins certains des orifices 10a, 10b, 10c, 10d, 10e, 10f, 10g et 10h.

Là encore, plusieurs structures support 1 peuvent être disposées côte à côte de la même manière. Alors les différentes structures support 1 peuvent être assemblées entre elles, au moyen de boulons ou d'étriers E traversant les orifices de fixation 10i, 10j, 10k, 10l, 10m et 10n des parois de côté 6 et 7.

Les possibilités d'assemblage entre elles des structures support 1 permettent de regrouper plusieurs structures support 1 en un même lieu ou sur une même zone, ce qui facilite le travail de l'éleveur, et ce qui améliore l'appétence des animaux en groupe par réaction de mimétisme.

Comme précisé ci-dessus, la jupe périphérique 12 de la structure support 1 se termine par une bordure libre inférieure 121 comprenant un bourrelet 122 de rigidification.

Ce bourrelet 122 de rigidification s'étend ici en saillie vers l'extérieur de la jupe périphérique 12 ; et la structure support 1 comprend des surépaisseurs 13a, 13b planes au niveau de certains au moins des orifices de fixation 10, qui permettent de compenser l'épaisseur saillante du bourrelet 122 et ainsi d'optimiser le contact plan lors de l'assemblage des structures support 1 entre elles.

Dans le mode de réalisation illustré sur les figures, des surépaisseurs 13a planes sont ménagées sur les deux couples d'orifices inférieurs des parois de côté 6, 7, à savoir sur les couples d'orifices 10k-10l et 10m-10n. Les surépaisseurs en question s'étendent sur quelques centimètres de large, vers le haut, depuis le bourrelet 122 de rigidification jusqu'à environ le niveau du plan de plateau P. Leur épaisseur correspond à l'épaisseur du bourrelet 122 en partie basse et elle décroit régulièrement jusqu'au niveau du plan de plateau P.

D'autre part une surépaisseur 13b plane est ménagée sur les quatre couples d'orifices 10a-10b, 10c-10d, 10e-10f et 10g-10h de la paroi arrière 5. La surépaisseur en question s'étend sur plusieurs centimètres de large, vers le haut, depuis le bourrelet 122 de rigidification jusqu'au niveau de la bordure supérieure de la paroi arrière 5. L'épaisseur de cette surépaisseur 13b correspond à l'épaisseur du bourrelet 122 et elle est constante sur toute sa hauteur.

Le bourrelet 122 de rigidification peut être obtenu lors de la fabrication de la structure support par roto moulage.

On peut alors prévoir une technique de fabrication :
- qui consiste à mettre en oeuvre un moule de fabrication en deux parties identiques, adapté pour l'obtention d'une structure roto moulée comprenant deux structures support 1, tête bêche, assemblées par leur base ;
- et ensuite, qui consiste à scinder la structure roto moulée monobloc en deux parties identiques, par découpe au niveau de leur base, c'est-à-dire au niveau de la bordure inférieure 121 de la jupe périphérique 12.

Le bourrelet 122 de rigidification, en saillie vers l'extérieur de la jupe périphérique 12 est alors obtenu par une excroissance périphérique ménagée dans la zone périphérique de jointure des deux parties de moule.

## Revendications

1. Structure support (1) pour la mise à disposition à des animaux d'élevage d'un produit, notamment d'un complément nutritionnel solide à lécher,
ladite structure support (1) comprenant un plateau embase (2) délimité par un pourtour de plateau (4) comprenant une bordure arrière (41), deux bordures de côtés (42, 43) et une bordure avant (44), lequel plateau embase (2) s'étend dans un plan de plateau (P) et comprend un logement (3) adapté pour la réception dudit produit notamment en forme de complément nutritionnel solide à lécher ou d'un contenant dudit complément nutritionnel solide à lécher,
lequel logement (3) est constitué d'une ouverture de logement (31) ménagée dans ledit plateau embase (2), laquelle ouverture de logement (31) est délimitée par un contour d'ouverture (32) à partir duquel s'étend vers le bas une paroi de logement (33) qui se termine par un fond de logement (34),
laquelle bordure arrière (41) dudit plateau embase (2) se prolonge, de part et d'autre dudit plan de plateau (P), par une paroi arrière (5),
lesquelles bordures de côté (42, 43) dudit plateau embase (2) se prolongent chacune, de part et d'autre dudit plan de plateau (P), par une paroi de côté (6, 7),
et laquelle bordure avant (44) dudit plateau embase (2) se prolonge, sous ledit plan de plateau (P) par une paroi avant (8),°
lesquelles paroi arrière (5), parois de côté (6, 7) et paroi avant (8) s'étendent dans des plans perpendiculaires ou pratiquement perpendiculaires audit plan de plateau (P),
ladite paroi arrière (5) et lesdites parois de côté (6, 7) comprenant des orifices de fixation (10) adaptés à la fixation de ladite structure support (1) au moyens de vis (V) et/ou d'étriers (E) sur un organe support tel qu'un mur (M) ou une lisse (L) horizontale de barrière (B).

2. Structure support (1) selon la revendication 1, **caractérisée en ce que** certains au moins desdits orifices de fixation (10) sont organisés en couples d'orifices alignés verticalement, pour la fixation au moyen d'étrier(s) (E).

3. Structure support (1) selon la revendication 2, **caractérisée en ce que** ladite paroi arrière (5) comprend au moins deux couples d'orifices de fixation (10a-10b, 10c-10d, 10e-10f, et 10g-10h), et **en ce que** lesdites parois de côté (6, 7) comprennent chacune au moins deux couples d'orifices de fixation (10i-10j, 10k-10l, 10m-10n).

4. Structure support (1) selon la revendication 3, **caractérisée en ce que** ladite paroi arrière (5) comprend au moins deux couples d'orifices de fixation (10a-10b, 10c-10d) alignés horizontalement, ménagés d'un côté dudit plan de plateau (P), et au moins deux couples d'orifices de fixation (10e-10f, 10g-10h) alignés horizontalement, ménagés de l'autre côté dudit plan de plateau (P),
et **en ce que** lesdites parois de côté (6, 7) comprennent chacune au moins un couple d'orifices de fixation(10i-10j), ménagés au-dessus dudit plan de plateau (P), et au moins deux couples d'orifices de fixation (10k-10l, 10m-10n) alignés horizontalement, ménagés au-dessous dudit plan de plateau (P).

5. Structure support (1) selon l'une quelconque des revendications 1 à 4, **caractérisée en ce que** les côtés latéraux de ladite paroi arrière (5) se prolongent chacun de manière monobloc par l'un des côtés latéraux de l'une desdites parois de côté (6, 7).

6. Structure support (1) selon la revendication 5, **caractérisée en ce que**, au-dessus dudit plan de plateau (P), lesdites parois de côté (6, 7) s'étendent sur une partie seulement de la longueur desdites bordures de côté (42, 43) dudit plateau embase (2),
et **en ce que** la bordure d'extrémité libre (61, 71) desdites parois de côté (6, 7) s'étend en pente ou en biais depuis une bordure supérieure (62, 72) de chaque paroi de côté (6, 7) jusqu'audit plateau embase (2), pour former un pan coupé.

7. Structure support (1) selon la revendication 6, **caractérisée en ce que** l'extrémité supérieure dudit pan coupé (61, 71) comprend une extension en saillie (63, 73), et **en ce que** la base dudit pan coupé (61, 71) comprend une réservation en creux (64, 74), complémentaire de ladite extension en saillie (63, 73), laquelle extension en saillie (63, 73) et laquelle réservation en creux (64, 74) sont adaptées pour constituer des structures d'emboitement pour stabiliser deux structures support (1) identiques agencées tête-bêche, lors du stockage ou du transport.

8. Structure support (1) selon l'une quelconque des revendications 1 à 7, **caractérisée en ce que** ladite paroi arrière (5) et lesdites parois de côté (6, 7) comprennent chacune un panneau extérieur (5b, 6b, 7b) qui s'étend sur toute leur hauteur et un panneau intérieur (5a, 6a, 7a) qui s'étend vers le haut à partir dudit plateau embase (2), lesquels panneaux extérieur (5b, 6b, 7b) et panneaux intérieurs (5a, 6a, 7a) s'étendent parallèlement entre eux sur chaque paroi (5, 6, 7) et sont raccordés au niveau de leur bordure supérieure,
et **en ce que** lesdits panneaux extérieurs (5b, 6b, 7b) de ladite paroi arrière (5) et desdites parois de côté (6, 7) se prolongent par ladite paroi avant (8) pour former une jupe périphérique (12).

9. Structure support (1) selon l'une quelconque des revendications 1 à 8, **caractérisée en ce que** lesdits orifices de fixation (10a, 10b, 10c, 10d, 10e, 10f, 10g, 10h) de ladite paroi arrière (5) sont adaptés pour permettre l'assemblage de deux structures supports (1) identiques disposées dos à dos,
et **en ce que** lesdits orifices de fixation (10i, 10j, 10k, 10l, 10m, 10n) desdites parois de côté (6, 7) sont adaptés pour permettre l'assemblage d'au moins deux structures supports identiques placées côte à côte.

10. Structure support (1) selon la revendication 9, **caractérisée en ce qu'**elle comprend une jupe périphérique (12) qui se termine par une bordure libre inférieure (121) comprenant un bourrelet (122) de rigidification en saillie vers l'extérieur, et **en ce qu'**elle comprend une surépaisseur (13a, 13b) plane au niveau de certains au moins desdits orifices de fixation (10), qui permet de compenser l'épaisseur saillante dudit bourrelet (122) et ainsi d'optimiser le contact plan lors de l'assemblage des structures support (1) entre elles.

## Patentansprüche

1. Trägerstruktur (1) für die Bereitstellung eines Produkts für Nutztiere, insbesondere eines festen Nahrungsergänzungsmittels zum Lecken,
wobei die Trägerstruktur (1) eine Basisplatte (2) aufweist, die durch einen Plattenumfang (4) begrenzt ist, der einen hinteren Rand (41), zwei seitliche Ränder (42, 43) und einen vorderen Rand (44) aufweist, wobei sich die Basisplatte (2) in einer Plattenebene (P) erstreckt und einen Aufnahmeraum (3) aufweist, der für die Aufnahme des Produkts, insbesondere in Form eines festen Nahrungsergänzungsmittels zum Lecken, oder eines Behälters mit dem festen Nahrungsergänzungsmittel zum Lecken ausgelegt ist,
wobei der Aufnahmeraum (3) aus einer Aufnahmeraumöffnung (31) besteht, die in der Basisplatte (2) eingerichtet ist, wobei die Aufnahmeraumöffnung (31) durch einen Öffnungsumfang (32) begrenzt ist, von dem aus sich eine Aufnahmeraumwand (33) nach unten erstreckt, die mit einem Aufnahmeraumboden (34) endet,
wobei der hintere Rand (41) der Basisplatte (2) beiderseits der Plattenebene (P) durch eine Rückwand (5) verlängert ist,
wobei die seitlichen Ränder (42, 43) der Basisplatte (2) beiderseits der Plattenebene (P) jeweils durch eine Seitenwand (6, 7) verlängert sind,
und wobei der vordere Rand (44) der Basisplatte (2) unterhalb der Plattenebene (P) durch eine Vorderwand (8) verlängert ist,
wobei sich die Rückwand (5), die Seitenwände (6, 7) und die Vorderwand (8) in Ebenen erstrecken, die zur Plattenebene (P) senkrecht oder im Wesentlichen senkrecht sind,
wobei die Rückwand (5) und die Seitenwände (6, 7) Befestigungslöcher (10) aufweisen, die zur Befestigung der Trägerstruktur (1) mittels Schrauben (V) und/oder Befestigungsbügeln (E) an einem Trägerorgan wie zum Beispiel einer Mauer (M) oder einem horizontalen Balken (L) ausgelegt sind.

2. Trägerstruktur (1) gemäß Anspruch 1, **dadurch gekennzeichnet, daß** mindestens einige der Befestigungslöcher (10) für eine Befestigung mittels Befestigungsbügel(n) (E) als senkrecht aufeinander ausgerichtete Lochpaare ausgebildet sind.

3. Trägerstruktur (1) gemäß Anspruch 2, **dadurch gekennzeichnet, daß** die Rückwand (5) mindestens zwei Paar Befestigungslöcher (10a-10b, 10c-10d, 10e-10f und 10g-10h) aufweist und daß die Seitenwände (6, 7) jeweils mindestens zwei Paar Befestigungslöcher (10i-10j, 10k-10l, 10m-10n) aufweisen.

4. Trägerstruktur (1) gemäß Anspruch 3, **dadurch gekennzeichnet, daß** die Rückwand (5) mindestens zwei Paar horizontal aufeinander ausgerichtete Befestigungslöcher (10a-10b, 10c-10d), die auf einer Seite der Plattenebene (P) eingebracht sind, und mindestens zwei Paar horizontal aufeinander ausgerichtete Befestigungslöcher (10e-10f, 10g-10h), die auf der anderen Seite der Plattenebene (P) eingebracht sind, aufweist
und daß die Seitenwände (6, 7) jeweils mindestens ein Paar oberhalb der Plattenebene (P) eingebrachte Befestigungslöcher (10i-10j) und mindestens zwei Paar unterhalb der Plattenebene (P) eingebrachte, horizontal aufeinander ausgerichtete Befestigungslöcher (10k-101, 10m-10n) aufweisen.

5. Trägerstruktur (1) gemäß einem der Ansprüche 1 bis 4, **dadurch gekennzeichnet, daß** die seitlichen Ränder der Rückwand (5) jeweils einstückig durch einen der seitlichen Ränder einer der Seitenwände (6, 7) verlängert sind.

6. Trägerstruktur (1) gemäß Anspruch 5, **dadurch gekennzeichnet, daß** sich die Seitenwände (6, 7) oberhalb der Plattenebene (P) nur über einen Teil der Länge der seitlichen Ränder (42, 43) der Basisplatte (2) erstrecken
und daß sich der Rand des freien Endes (61, 71) der Seitenwände (6, 7) von einem oberen Rand (62, 72) jeder Seitenwand (6, 7) bis zur Basisplatte (2) abfallend oder schräg erstreckt, um eine abgeschrägte Ecke zu bilden.

7. Trägerstruktur (1) gemäß Anspruch 6, **dadurch gekennzeichnet, daß** das obere Ende der abgeschrägten Ecke (61, 71) eine hervorstehende Verlängerung (63, 73) aufweist und daß die Basis der abgeschrägten Ecke (61, 71) eine zur hervorstehenden Verlängerung (63, 73) komplementäre Vertiefung (64, 74) aufweist, wobei die hervorstehende Verlängerung (63, 73) und die Vertiefung (64, 74) dazu ausgelegt sind, Verschachtelungsstrukturen zu bilden, um zwei entgegengesetzt angeordnete identische Trägerstrukturen (1) bei der Lagerung oder beim Transport zu stabilisieren.

8. Trägerstruktur (1) gemäß einem der Ansprüche 1 bis 7, **dadurch gekennzeichnet, daß** die Rückwand (5) und die Seitenwände (6, 7) jeweils eine Außenwand (5b, 6b, 7b), die sich über die gesamte Höhe erstreckt, und eine Innenwand (5a, 6a, 7a), die sich von der Basisplate (2) aus nach oben erstreckt, aufweisen, wobei sich die Außenwand (5b, 6b, 7b) und die Innenwände (5a, 6a, 7a) auf jeder Wand parallel zueinander erstrecken und an ihrem oberen Rand miteinander verbunden sind,
und daß die Außenwände (5b, 6b, 7b) der Rückwand (5) und der Seitenwände (6, 7) durch die Vorderwand (8) verlängert sind, um einen Umfangsmantel (12) zu bilden.

9. Trägerstruktur (1) gemäß einem der Ansprüche 1 bis 8, **dadurch gekennzeichnet, daß** die Befestigungslöcher (10a, 10b, 10c, 10d, 10e, 10f, 10g, 10h) der Rückwand (5) dazu ausgelegt sind, das Zusammenfügen zweier identischer, Rücken an Rücken angeordneter Trägerstrukturen (1) zu ermöglichen,
und daß die Befestigungslöcher (10i, 10j, 10k, 101, 10m, 10n) der Seitenwände (6, 7) dazu ausgelegt sind, das Zusammenfügen mindestens zweier nebeneinander angeordneter identischer Trägerstrukturen (1) zu ermöglichen.

10. Trägerstruktur (1) gemäß Anspruch 9, **dadurch gekennzeichnet, daß** sie einen Umfangsmantel (12) aufweist, der mit einem freien unteren Rand (121) endet, der einen nach außen abstehenden Versteifungswulst (122) aufweist,
und daß sie mindestens an einigen der Befestigungslöcher (10) eine ebene Überdicke (13a, 13b) aufweist, die ermöglicht, die hervorstehende Dicke des Wulsts (122) auszugleichen und so den ebenen Kontakt beim miteinander Zusammenfügen der Trägerstrukturen (1) zu optimieren.

## Claims

1. A support structure (1) for providing livestock with a product, in particular a solid nutritional supplement to be licked, said support structure (1) comprising a base tray (2) delimited by a tray perimeter (4) comprising a rear edge (41), two side edges (42, 43) and a front edge (44), said base tray (2) extending in a tray plane (P) and comprising a housing (3) suitable for receiving said product, in particular in the form of a solid nutritional supplement to be licked or a container of said solid nutritional supplement to be licked,
said housing (3) is consisted of a housing opening (31) formed in said base tray (2), said housing opening (31) is delimited by an opening contour (32) from which extends downward a housing wall (33) that is ended by a housing bottom (34),
said rear edge (41) of said base tray (2) is extended, on either side of said tray plane (P), by a rear wall (5),
said side edges (42, 43) of said base tray (2) are each extended, on either side of said tray plane (P), by a side wall (6, 7),
and said front edge (44) of said base tray (2) is extended, below said tray plane (P), by a front wall (8),
said rear wall (5), side walls (6, 7) and front wall (8) extending in planes perpendicular or substantially perpendicular to the tray plane (P),
said rear wall (5) and said side walls (6, 7) comprising fixing holes (10) suitable for fixing said support structure (1) by means of screws (V) and/or brackets (E) to a support element such as a wall (M) or a horizontal beam (L) of a barrier (B).

2. The support structure (1) according to claim 1, **characterized in that** at least some of said fixing holes (10) are arranged in pairs of holes, vertically aligned with each other, for fixing by means of bracket(s) (E).

3. The support structure (1) according to claim 2, **characterized in that** said rear wall (5) comprises at least two pairs of fixing holes (10a-10b, 10c-10d, 10e-10f, and 10g-10h), and **in that** said side walls (6, 7) each comprise at least two pairs of fixing holes (10i-10j, 10k-10l, 10m-10n).

4. The support structure (1) according to claim 3, **characterized in that** said rear wall (5) comprises at least two pairs of fixing holes (10a-10b, 10c-10d), horizontally aligned with each other, arranged on one side of said tray plane (P), and at least two pairs of fixing holes (10e-10f, 10g-10h), horizontally aligned with each other, arranged on the other side of said tray plane (P),
and **in that** said side walls (6, 7) each comprise at least one pair of fixing holes (10i-10j), arranged above said tray plane (P), and at least two pairs of fixing holes (10k-10l, 10m-10n), horizontally aligned with each other, arranged below said tray plane (P).

5. The support structure (1) according to any one of claims 1 to 4, **characterized in that** the lateral sides of said rear wall (5) are each extended in one piece by one of the lateral sides of one of said side walls (6, 7).

6. The support structure (1) according to claim 5, **characterized in that**, above said tray plane (P), said lateral sides (6, 7) extend over only part of the length of said side edges (42, 43) of said base tray (2),
and **in that** the free end edge (61, 71) of said side walls (6, 7) extends with a slope or an angle from an upper edge (62, 72) of each side wall (6, 7) up to said base tray (2), to form a cut-off corner.

7. The support structure (1) according to claim 6, **characterized in that** the upper end of said cut-off corner (61, 71) comprises a projecting extension (63, 73), and **in that** the base of said cut-off corner (61, 71) comprises a recessed reservation (64, 74), complementary to said projecting extension (63, 73), said projecting extension (63, 73) and said recessed reservation (64, 74) being adapted to constitute interlocking structures for stabilizing two identical support structures (1), arranged head-to-tail, during storage or transport.

8. The support structure (1) according to any one of claims 1 to 7, **characterized in that** said rear wall (5) and said side walls (6, 7) each comprise an outer panel (5b, 6b, 7b) that extends over their whole height and an inner panel (5a, 6a, 7a) that extends upward from said base plate (2), said outer panels (5b, 6b, 7b) and inner panels (5a, 6a, 7a) extend parallel to each other on each wall (5, 6, 7) and are connected at their upper edge,
and **in that** said outer panels (5b, 6b, 7b) of said rear wall (5) and said side walls (6, 7) are extended by said front wall (8) to form a peripheral skirt (12).

9. The support structure (1) according to any one of claims 1 to 8, **characterized in that** said fixing holes (10a, 10b, 10c, 10d, 10e, 10f, 10g, 10h) of said rear wall (5) are adapted to allow the assembly of two identical support structures (1) arranged back to back,
and **in that** said fixing holes (10i, 10j, 10k, 10l, 10m, 10n) of said side walls (6, 7) are adapted to allow the assembly of at least two identical support structures placed side by side.

10. The support structure (1) according to claim 9, **characterized in that** it comprises a peripheral skirt (12) that is ended by a lower free edge (121) comprising an outwardly projecting stiffening bead (122),
and **in that** it comprises a flat extra thickness (13a, 13b) at the level of at least some of said fixing holes (10), which makes it possible to compensate for the projecting thickness of said bead (122) and thus to optimize the flat contact when the support structures (1) are assembled together.
